(19)

**Europäisches Patentamt**

**European Patent Office**

**Office européen des brevets**

(11) **EP 4 032 638 A1**

(12) **EUROPEAN PATENT APPLICATION**

(43) Date of publication:
**27.07.2022 Bulletin 2022/30**

(21) Application number: **21152452.5**

(22) Date of filing: **20.01.2021**

(51) International Patent Classification (IPC):
**B22F 1/00** *(2022.01)* **B22F 9/08** *(2006.01)*
**C22C 33/02** *(2006.01)* **C22C 38/00** *(2006.01)*
**C22C 38/02** *(2006.01)* **C22C 38/06** *(2006.01)*
**C22C 38/28** *(2006.01)* **C22C 38/36** *(2006.01)*
**C22C 38/38** *(2006.01)* **B22F 3/15** *(2006.01)*
**B22F 3/22** *(2006.01)* **B22F 10/14** *(2021.01)*
**B22F 10/28** *(2021.01)* **B22F 10/34** *(2021.01)*
**B33Y 70/00** *(2020.01)* **B33Y 80/00** *(2015.01)*

(52) Cooperative Patent Classification (CPC):
**C22C 38/38; B22F 1/052; B22F 9/082;**
**C22C 33/0278; C22C 33/0285; C22C 38/001;**
**C22C 38/002; C22C 38/02; C22C 38/06;**
**C22C 38/28; C22C 38/36;** B22F 3/15; B22F 3/225;
B22F 10/14; B22F 10/28; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sandvik Machining Solutions AB
811 81 Sandviken (SE)**

(72) Inventors:
• **BETTINI, Eleonora
811 81 SANDVIKEN (SE)**
• **DAVIES, Paul
811 81 Sandviken (SE)**
• **KEARNS, Martin
Swansea, SA2 8AR (GB)**

(74) Representative: **Sandvik
Sandvik Intellectual Property AB
811 81 Sandviken (SE)**

(54) **A STEEL POWDER AND A METHOD OF PRODUCING SUCH A POWDER**

(57) A steel powder, comprising, in wt.%, C 0.05-2.0, Mn 14.0-30.0, Al 5.0-10.0, Cr 3.0-10.0, Si 0.1-2.0, Ti 0.05-0.5, and, as optionals, Ni 0.0-0.2, N 0.0-1.0, O 0.0-0.50, and balance Fe and unavoidable impurities.

EP 4 032 638 A1

(52) Cooperative Patent Classification (CPC): (Cont.)
     B22F 10/34; B22F 2009/0824; B22F 2009/0844;
     B33Y 70/00; B33Y 80/00; C21D 2211/001

**Description**

TECHNICAL FIELD

The present invention relates to a steel powder, comprising, in wt.%, C 0.05-2.0, Mn, Al, Cr, Si, Ti, and, as optionals, N and O, and balance Fe and unavoidable impurities. The steel powder has low density, is substantially austenitic, is substantially non-magnetic and has low or no content of nickel.

The invention also relates to a method of producing such a powder, comprising the steps of providing a steel melt having a composition such that, when subjected to an atomization process, it will form a powder according to the invention, providing a powder by atomising the steel melt, and extracting, from the atomised powder, a powder fraction which has a median particle diameter m < 100 $\mu$m, or such that m < 20$\mu$m.

BACKGROUND

There are applications in which there is a need for a steel that, apart from having a predetermined mechanical strength and sufficient resistance to corrosion, also has a low density, is substantially non-magnetic and does not pose a problem for people having nickel-allergy upon physical contact with the steel. Accordingly, the steel should not contain any magnetic BCC phase or only a very small fraction of BCC-phase, typically ferrite, or any nickel, or only a very low content of nickel. Manganese may therefore be used instead of nickel for the stabilization of austenite.

In order to obtain a low-density steel, aluminium may be added as an alloying element. However, the content of Al has to be balanced against the amount of Mn since Al is a ferrite-stabilizer.

When powder technology is used for producing items of such a steel, gas atomisation of a melt into a powder is normally followed by extraction of powder fractions of different median particle sizes. Under certain circumstances, very fine powder fractions are more prone to self-ignition and explosion than coarser powder fractions. This tendency is increased by the presence of certain reactive elements which have low ignition energy, such as Al, Ti.

OBJECT OF THE INVENTION

It is an object of the present invention to provide a steel powder that, when used in powder technology for producing a steel product, results in a steel product that has good mechanical properties/durability, is substantially non-magnetic, has low density, does not promote an allergic reaction in people pre-disposed to nickel allergies, and wherein the powder has a reduced tendency to self-ignition and explosion.

It is also an object of the invention to present a method of producing a powder, wherein there is a reduced tendency to self-ignition and explosion of the powder.

It is also an object of the invention to present a powder to be used in a method of producing a piece of steel, which piece of steel is substantially non-magnetic, has good mechanical properties/durability, has low density, does not promote an allergic reaction in people with nickel allergy, wherein the method uses powder technology and wherein the risk of explosion of the powder is reduced or suppressed. Such method can be metal injection molding (MIM), an additive manufacturing method, e.g. powder bed fusion or binder jetting, or a solid state consolidation method, e.g. hot isostatic pressing (HIP).

SUMMARY

The object of the invention is achieved by means of a steel powder, comprising, in wt.%,

| C | 0.05-2.0, |
|---|---|
| Mn | 14.0-30.0, |
| Al | 5.0-10.0, |
| Cr | 3.0-10.0, |
| Si | 0.1-2.0, |
| Ti | 0.05-1.0, |

and, as optionals,

| NI | 0-0.2, |
|---|---|
| N | 0-1.0, |

(continued)

| | |
|---|---|
| O | 0-0.50, |

and balance Fe and unavoidable impurities.

According to one embodiment, the steel powder comprises, in wt.%;

| | |
|---|---|
| C | 0.80-1.2, |
| Mn | 15.0-26.0, |
| Al | 5.0-8.5, |
| Cr | 3.0-7.0, |
| Si | 0.3-1.1, |
| Ti | 0.05-0.5, |

and, as optionals,

| | |
|---|---|
| Ni | 0-0.2, |
| N | 0-1.0, |
| O | 0-0.50, |

and balance Fe and unavoidable impurities.

According to one embodiment, the steel powder comprises, in wt. %:

| | |
|---|---|
| C | 0.80-1.20, |
| Mn | 15.0-23.0, |
| Al | 5.5-8.5, |
| Cr | 5.0-7.0, |
| Si | 0.3-1.1, |
| Ti | 0.05-0.3, |

and, as optionals,

| | |
|---|---|
| Ni | 0-0.2, |
| N | 0-0.50, |
| O | 0-0.50, |

and balance Fe and unavoidable impurities.

According to one embodiment, the content of Ni in the steel powder is 0 wt.%. Thereby, the risk of people having nickel allergy being affected by the steel formed by the steel powder is further reduced.

According to one embodiment, the composition of the steel powder is such that, for a fraction of the powder having a median particle diameter ($d_{50}$) of m=10 $\mu$m, the explosion factor Ef < 3.0 (MJ/kg*$\mu$m$^{-0.5}$), wherein

$$Ef = Hf \times (1/\sqrt{m}),$$

wherein

Hf is the sum of the heat of combustion contributions Hc(element) of each of the elements of Fe, Cr, Ti, Mn, C, Al and Si, wherein the heat of combustion contribution Hc for each element is expressed by the following expression:

$$Hc(element) = Hci(element) \times wt.\%(element)/100,$$

wherein

Hci(element) is the heat of combustion value of each respective element as measured in MJ/kg, wherein

Hci(Fe) = 7.4;
Hci(Cr) = 6.0;
Hci(Ti) = 19.7;
Hci(Al) = 31.0;
Hci(Mn) = 7.0;
Hci(C) = 7.0;
Hci(Si) = 16.0.

The heat of combustion value Hci is a value indicating how much energy (in MJ/kilogram) is generated when a material burns or explodes forming its equilibrium oxide at normal temperature and pressure (NTP). Alloying elements having a high heat of combustion value Hci will contribute more to the self ignition and explosion tendency of a steel than elements of the steel having a lower heat of combustion value. It is noted that aluminium, which is preferably used for lowering the density of the steel, has a remarkably high heat of combustion value, and therefore a substantial effect on the self-ignition and explosion tendency of the steel powder. Titanium, Ti, is used as a carbide-former for achieving higher strength in the steel, contributes to low density and also has a rather high heat of combustion value. The invention suggests a balancing of the amounts of the alloying elements of the steel such that the explosion risk, defined by the explosion factor Ef, is below a predetermined level.

According to one embodiment, the composition of the steel is such that the explosion factor $Ef < 2.95$ (MJ/kg*$\mu$m$^{-0.5}$).

According to one embodiment, the composition of the steel is such that the density $\underline{d}$ of the steel forming the steel powder, defined as the density of a particle being fully dense and essentially without any closed porosity therein, is less than 7.20 g/cm$^3$. According to one embodiment, $\underline{d} < 6.97$ g/cm$^3$.

According to one embodiment, the composition of the powder is such that, after sintering or melting-solidification of the powder or heat treatment of the powder at a temperature above 1 000°C and subsequent quenching thereof, the sintered, melted-solidified or heat treated piece of steel made of the powder is austenitic, having a BCC phase content therein of 0-10 volume%, preferably 0-5 volume%.

According to one embodiment, the powder is an atomised powder having a median particle diameter m, wherein m < 100 $\mu$m.

According to one embodiment, the powder is a gas-atomised powder having a median particle diameter m, wherein m < 20$\mu$m.

According to one embodiment, the content of manganese is Mn $\geq$ 16.5 wt.%.

According to one embodiment, the content of manganese is Mn $\geq$ 19 wt.%.

According to one embodiment, the content of aluminium is Al > 6.0 wt.%.

According to one embodiment, the content of aluminium is Al > 6.5 wt.%.

The object of the invention is also achieved by means of a method of producing a powder according to the invention, comprising the steps of

- providing a steel melt having a composition such that, when subjected to an atomization process, it will form a powder according to the invention,
- providing a powder by atomising the steel melt,
- extracting, from the atomised powder, a powder fraction which has a median particle diameter m < 100 $\mu$m.

The steel melt preferably comprises raw materials in the form of scraps and reverts, or more preferably of virgin feedstocks and commercially available ferroalloys. The steel melt is transformed into powder using a gas atomization technique wherein a stream of steel melt flowing through a nozzle is disintegrated into droplets by impingement of a high-pressure gas stream, such as nitrogen, with the particles thus created being collected in a nitrogen atmosphere. Alternately, a suitable inert atmosphere such as argon can also be used. The pressure of the gas stream is preferably above 30 bar. Depending on the exact desired properties of the powder, a higher or lower pressure can be used. The droplets cool in an atomisation tower to form solid particles. The cooling rate will affect the properties of the powder but typically rates of between $10^2$ to $10^7$ K/s are used. Particles in the desired fraction are subsequently extracted using suitable air classification equipment, such as the ATP Turboflex Air Classifier from Hosokawa Micron Ltd. Using alternative air classification or powder separation epuipment is also possible and the mentioned equipment is meant to serve only as an example.

According to one embodiment, the atomisation is gas atomisation.

According to one embodiment, the step of extraction comprises extracting, from the atomised powder, a powder fraction which has a median particle diameter m < 20$\mu$m.

According to one embodiment, extracting comprises sieving, typically in an atmosphere containing oxygen (air). In connection to low-cost sieving, conditions, such as presence of oxygen, that promote self-ignition and explosion of the powder will be present. The invention is thus particularly suited when sieving and/or air classification are used as extraction methods. According to one embodiment, the sieving comprises the step of passing the powder through a mesh in the presence of oxygen (air).

One object of the invention is also achieved by means of the powder described hereabove used in a method of producing a piece of steel, forming a green body of the powder via additive manufacturing, such as metal binder jetting, or metal injection molding, and subjecting the powder to a sintering process. Alternatively, the powder may be subjected to a solid state consolidation or melting-solidification process in which said piece of steel is formed. Solid state consolidation and melting-solidification process may, for example, include HIP and powder bed fusion, respectively.

According to one embodiment, the method also comprises subjecting the piece of steel to a heat treatment above 1000°C followed by quenching. The heat treated and quenched piece of steel shall be austenitic, having a BCC phase content therein of 0-10 volume%, preferably 0-5 volume%.

DETAILED DESCRIPTION

In the following, essential elements of the steel of the invention and their contribution to the functionality and characteristics of the steel and the steel powder will be discussed.

Carbon, C, is used as a carbide-former, thereby adding mechanical strength to the steel, and preventing to some extent the formation of unwanted intermetallic phases. C increases the stability of the austenite and has a strong solid solution hardening effect.

Manganese, Mn, is used as main austenite stabilizer, as Ni should be avoided.

Aluminium, Al, is used for lowering the density of the steel and for contributing to the strength of the steel by forming carbides, or by forming nitrides if nitrogen is present in the steel. Al is a ferrite stabilizer. It also has a high heat of combustion value, thereby adding to the explosion tendency of a powder. At least for the latter reason, the amount of aluminium should not be too high.

Chromium, Cr, contributes to the corrosion resistance of the steel. Cr is a ferrite stabilizer, and should, at least for that reason, not be too high in content. It has a lower heat of combustion value than other essential elements in the steel, and could therefore be used to compensate for the more negative impact of Al in that respect.

Titanium, Ti, contributes to the strength of the steel by forming carbides and/or nitrides. Ti stabilizes ferrite and has a high heat of combustion value. It is therefore only present up to 1.0 wt.% in the steel.

Silicon, Si, makes the melt more fluid and thereby facilitates the atomization process. Si also has a low density. However, Si stabilizes ferrite and has a high heat of combustion value. It is therefore only present up to 2.0 wt.% in the steel.

Nitrogen, N, may be present up to 1.0 wt.% in the steel powder. However, too much N may result in large amount of precipitates with a risk of reducing ductility of the steel.

Nickel, Ni, may be present up to 0.2 wt.%. Above that level, Ni may cause allergic reactions for people being allergic to nickel. Absence of Ni from the powder will remedy the problem completely.

EXAMPLES

Examples of different compositions, some of which are wihin the claimed scope of protection of the present invention, are presented hereinafter with the aim of showing how the steel composition affects the explosion risk, as defined by the explosion factor.

In all examples, and for the purpose of defining the particle sizes as defined in the present invention, meausurments of particle size have been performed by Malvern Mastersizer 2000 with Wet Dispersion Unit and using Mie theory to calculate the best fit size distribution.

Example 1

A powder according to the present invention was manufactured by providing a steel melt with composition according to Table 1. The steel melt preferably comprises raw materials in the form of virgin feedstocks and commercially available ferroalloys. The steel melt was transformed into powder by using a gas atomization technique where the steel melt was disintegrated into droplets through a nozzle by a high-pressure gas stream in a nitrogen atmosphere. The pressure of the disintegrating gas stream was preferably kept above 30 bar. The droplets cooled down in an atomisation tower containing nitrogen flow gas to form solid particles. Particles in the fraction referred to in example 1 were subsequently extracted using an air classification equipment, such as the ATP Turboflex Air Classifier from Hosokawa Micron Ltd.

The composition of example 1 (Table 1) is within the claimed scope, and the explosion factor is as low as 2.82 $MJ/kg*\mu m^{-0.5}$.

Table 1.

| 1. Fe16Mn6.5Al6Cr | | | |
|---|---|---|---|
| Elements | Hc$_i$ (MJ/kg) | Composition (wt.%) | Hc (MJ/kg) = Hc$_i$*wt.%(element)/100 |
| Fe | 7.4 | 68.54 | 5.07196 |
| Cr | 6.0 | 5.9 | 0.354 |
| Ti | 19.7 | 0.28 | 0.05516 |
| Al | 31.0 | 6.6 | 2.046 |
| Mn | 7.0 | 16.8 | 1.17768 |
| C | 7.0 | 1.08 | 0.0756 |
| Si | 16.0 | 0.8 | 0.128 |
| Hf (MJ/kg) = Σ Hc | | | **8.9084** |
| Median (d$_{50}$) μm | | **10** | |
| Ef (MJ/kg*μm$^{-0.5}$) | | | **2.82** |

Hc$_i$: heat of combustion value of each respective element expressed in MJ/kg

Hc: heat of combustion contribution for each element in the alloy calculated expressen in MJ/kg and calculated according to

$$Hc\ (element) = Hci\ (element)*wt.\%(element)/100$$

Hf: Heat of formation (expressed in MJ/kg) of the alloy calculated as the sum of the Hc (element) of the elements comprising the alloy.

Ef: explosion factor calculated as $Ef = Hf*(1/\sqrt{m})$, where "m" is the median (d$_{50}$) equal to 10 μm in the calculation. Ef is expressed in MJ/kg*μM$^{-0.5}$

Example 2

A powder according to the present invention was manufactured by providing a steel melt with composition according to Table 2 and using the same technique as described in Example 1.

The composition of example 2 is within the claimed scope, and the explosion factor is as low as 2.91 MJ/kg*μm$^{-0.5}$.

Table 2.

| 2. Fe22Mn7.5Al6Cr | | | |
|---|---|---|---|
| Elements | Hc$_i$ (MJ/kg) | Composition (wt.%) | Hc (MJ/kg) = Hc$_i$*wt. %(element)/100 |
| Fe | 7.4 | 61.07 | 4.51918 |
| Cr | 6.0 | 6.2 | 0.372 |
| Ti | 19.7 | 0.25 | 0.04925 |
| Al | 31.0 | 7.8 | 2.418 |
| Mn | 7.0 | 22.5 | 1.57725 |
| C | 7.0 | 1.08 | 0.0756 |
| Si | 16.0 | 1.1 | 0.176 |
| Hf (MJ/kg) = Σ Hc | | | **9.18728** |
| Median (d$_{50}$) μm | | **10** | |
| Ef (MJ/kg*μm$^{0.5}$) | | | **2.91** |

## Example 3

The composition shown in Table 3 (calculated composition) is outside the claimed scope, due to the lack of Cr, and has therefore a reduced corrosion resistance.

Table 3.

| 3. Fe16Mn6.5Al0cr | | | |
|---|---|---|---|
| Elements | $Hc_i$ (MJ/kg) | Composition (wt.%) | Hc (MJ/kg) = $Hc_i$*wt. %(element)/100 |
| Fe | 7.4 | 74.44 | 5.50856 |
| Cr | 6.0 | - | - |
| Ti | 19.7 | 0.28 | 0.05516 |
| Al | 31.0 | 6.6 | 2.046 |
| Mn | 7.0 | 16.8 | 1.17768 |
| C | 7.0 | 1.08 | 0.0756 |
| Si | 16.0 | 0.8 | 0.128 |
| Hf (MJ/kg) = Σ Hc | | | **8.991** |
| Median ($d_{50}$) μm | | **10** | |
| Ef (MJ/kg*μm$^{0.5}$) | | | **2.84** |

## Example 4

The composition shown in Table 4 (calculated composition) is outside the claimed scope, due to the lack of Cr and the relatively high Al content. The high Al content results in a remarkably higher explosion risk, which can not be mitigated by Cr, due to its absence.

Table 4.

| 4. Fe25Mn9Al0Cr | | | |
|---|---|---|---|
| Elements | $Hc_i$ (MJ/kg) | Composition (wt.%) | Hc (MJ/kg) = $Hc_i$*wt. %(element)/100 |
| Fe | 7.4 | 63.84 | 4.72416 |
| Cr | 6.0 | - | - |
| Ti | 19.7 | 0.28 | 0.05516 |
| Al | 31.0 | 9.0 | 2.79 |
| Mn | 7.0 | 25.0 | 1.7525 |
| C | 7.0 | 1.08 | 0.0756 |
| Si | 16.0 | 0.8 | 0.128 |
| Hf (MJ/kg) = Σ Hc | | | **9.52542** |
| Median ($d_{50}$) μm | | **10** | |
| Ef (MJ/kg*μm$^{0.5}$) | | | **3.01** |

## Example 5

The composition shown in Table 5 (calculated composition) has an even higher content of Al, a high Mn content and low Cr content. The explosion factor is remarkably higher than for examples 1 and 2.

Table 5.

| 5. Fe25Mn12Al3Cr | | | |
|---|---|---|---|
| Elements | $Hc_i$ (MJ/kg) | Composition (wt.%) | Hc (MJ/kg) = $Hc_i$*wt. %(element)/100 |
| Fe | 7.4 | 57.84 | 4.28016 |
| Cr | 6.0 | 3.0 | 0.18 |
| Ti | 19.7 | 0.28 | 0.05516 |
| Al | 31.0 | 12.0 | 3.72 |
| Mn | 7.0 | 25.0 | 1.7525 |
| C | 7.0 | 1.08 | 0.0756 |
| Si | 16.0 | 0.8 | 0.128 |
| Hf (MJ/kg) = $\Sigma$ Hc | | | 10.19142 |
| Median ($d_{50}$) $\mu$m | | 10 | |
| Ef (MJ/kg*$\mu m^{0.5}$) | | | 3.22 |

Example 6

The composition shown in Table 6 (calculated composition) is within the claimed scope. It has a low explosion factor.

Table 6.

| 6. Fe23Mn8.5Al5Cr | | | |
|---|---|---|---|
| Elements | $Hc_i$ (MJ/kg) | Composition (wt.%) | Hc (MJ/kg) = $Hc_i$*wt. %(element)/100 |
| Fe | 7.4 | 62.35 | 4.6139 |
| Cr | 6.0 | 5.0 | 0.3 |
| Ti | 19.7 | 0.05 | 0.00985 |
| Al | 31.0 | 8.5 | 2.635 |
| Mn | 7.0 | 23.0 | 1.6123 |
| C | 7.0 | 0.8 | 0.056 |
| Si | 16.0 | 0.3 | 0.048 |
| Hf (MJ/kg) = $\Sigma$ Hc | | | 9.27505 |
| Median ($d_{50}$) $\mu$m | | 10 | |
| Ef (MJ/kg*$\mu m^{0.5}$) | | | 2.93 |

Example 7

The composition shown in Table 7 (calculated composition) has a lower content of Al combined with a relatively low content of Mn and Cr. As will be shown in Table 9, the resulting density is slightly higher than earlier examples, but still below 7.20 g/cm$^3$. The explosion factor is however, low.

Table 7.

| 7. Fe15Mn5.5Al5Cr | | | |
|---|---|---|---|
| Elements | $Hc_i$ (MJ/kg) | Composition (wt.%) | Hc (MJ/kg) = $Hc_i$*wt. %(element)/100 |
| Fe | 7.4 | 73.35 | 5.4279 |
| Cr | 6.0 | 5.0 | 0.3 |

(continued)

| 7. Fe15Mn5.5Al5Cr | | | |
|---|---|---|---|
| **Elements** | **Hc$_i$ (MJ/kg)** | **Composition (wt.%)** | **Hc (MJ/kg) = Hc$_i$*wt. %(element)/100** |
| **Ti** | 19.7 | 0.05 | 0.00985 |
| **Al** | 31.0 | 5.5 | 1.705 |
| **Mn** | 7.0 | 15.0 | 1.0515 |
| **C** | 7.0 | 0.8 | 0.056 |
| **Si** | 16.0 | 0.3 | 0.048 |
| **Hf (MJ/kg) = Σ Hc** | | | **8.59825** |
| **Median (d$_{50}$) μm** | | **10** | |
| **Ef (MJ/kg*μm$^{0.5}$)** | | | **2.72** |

Example 8

The composition shown in Table 8 (calculated) has a high content of Al combined with a high content of Mn and a relatively low content of Cr. The explosion factor is still below 2.95 (MJ/kg*μm$^{-0.5}$). As will be shown in Table 9, the resulting density is below 7.00 g/cm$^3$.

Table 8.

| 8. Fe30Mn8.5Al3Cr | | | |
|---|---|---|---|
| **Elements** | **Hc$_i$ (MJ/kg)** | **Composition (wt.%)** | **Hc (MJ/kg) = Hc$_i$*wt. %(element)/100** |
| **Fe** | 7.4 | 56.7 | 4.1958 |
| **Cr** | 6 | 3 | 0.18 |
| **Ti** | 19.7 | 0.2 | 0.0394 |
| **Al** | 31 | 8.5 | 2.635 |
| **Mn** | 7.0 | 30 | 2.103 |
| **C** | 7 | 1.1 | 0.077 |
| **Si** | 16 | 0.5 | 0.08 |
| **Hf (MJ/kg) = Σ Hc** | | | **9.3102** |
| **Median (d$_{50}$) μm** | | **10** | |
| **Ef (MJ/kg*μm$^{0.5}$)** | | | **2.94** |

Table 9 shows the theoretical full density (calculated density) of the compositions of examples 1-8 disclosed hereinabove. Measured densities of samples of examples 1 and 2 are also indicated.

Table 9

| Examples / Elements % | 1 | 2 | 3 | Explosion risk (compositions outside present invention) | | 6 | 7 | 8 |
|---|---|---|---|---|---|---|---|---|
| | | | | 4 | 5 | | | |
| Fe | 68.44 | 61.07 | 74.44 | 63.84 | 57.08 | 62.35 | 73.35 | 57.15 |
| Cr | 5.9 | 6.2 | 0.0 | 0.0 | 3.0 | 5.0 | 5.0 | 3.0 |
| Ti | 0.28 | 0.25 | 0.28 | 0.28 | 0.28 | 0.05 | 0.05 | 0.25 |
| Al | 6.6 | 7.8 | 6.6 | 9.0 | 12.0 | 8.5 | 5.5 | 8.5 |
| Mn | 16.8 | 22.5 | 16.8 | 25.0 | 25.0 | 23.0 | 15.0 | 30.0 |
| C | 1.08 | 1.08 | 1.08 | 1.08 | 1.08 | 0.8 | 0.8 | 1.1 |
| Si | 0.8 | 1.1 | 0.8 | 0.8 | 0.8 | 0.3 | 0.3 | 0.5 |
| Measured Density (g/cm³) | 6.95 | 6.82 | | | | | | |
| Calculated Density (g/cm³) | 6.95 | 6.79 | 6.85 | 6.54 | 6.29 | 6.81 | 7.18 | 6.59 |

Claims

1. A steel powder, comprising, in wt.%,

C          0.05-2.0,
Mn         14.0-30.0,
Al         5.0-10.0,
Cr         3.0-10.0,
Si         0.1-2.0,
Ti         0.05-1.0,

and, as optionals,

Ni         0-0.2,
N          0-1.0,
O          0-0.50,

and balance Fe and unavoidable impurities.

2. A steel powder according to claim 1, comprising, in wt.%,

C          0.80-1.2,
Mn         15.0-26.0,
Al         5.0-8.5,
Cr         3.0-7.0,
Si         0.3-1.1,
Ti         0.05-0.5,

and, as optionals,

Ni         0-0.2,

(continued)

| N | 0-1.0, |
|---|--------|
| O | 0-0.50, |

and balance Fe and unavoidable impurities.

3. A steel powder according to claim 1, comprising in wt.%

| C | 0.80-1.20, |
|---|-----------|
| Mn | 15.0-23.0, |
| Al | 5.5-8.5, |
| Cr | 5.0-7.0, |
| Si | 0.3-1.1, |
| Ti | 0.05-0.3, |

and, as optionals,

| Ni | 0-0.2, |
|---|--------|
| N | 0-0.50, |
| O | 0-0.50, |

and balance Fe and unavoidable impurities.

4. A steel powder according to claim 1, **wherein** the composition of the steel powder is such that, for a fraction of the powder having a median particle diameter of m=10 $\mu$m, the explosion factor Ef < 3.0 (MJ/kg*$\mu$m$^{-0.5}$), wherein

$$Ef = Hf \times (1/\sqrt{m}),$$

wherein Hf is the sum of the heat of combustion contributions Hc(element) of each of the elements of Fe, Cr, Ti, Mn, C, Al and Si, wherein the heat of combustion contribution Hc for each element is expressed by the following expression:

$$Hc(element) = Hci(element) \times wt.\%(element)/100,$$

wherein Hci(element) is the heat of combustion value of each respective element as measured in MJ/kg, wherein

Hci(Fe) = 7.4;
Hci(Cr) = 6.0;
Hci(Ti) = 19.7;
Hci(Al) = 31.0;
Hci(Mn) = 7.0;
Hci(C) = 7.0;
Hci(Si) = 16.0.

5. A steel powder according to claim 4, **wherein** Ef < 2.95 (MJ/kg*$\mu$m$^{-0.5}$).

6. A steel powder according to any one of claims 1-5, **wherein** the density d of the steel forming the steel powder, defined as the density of a particle being fully dense and essentially without any closed porosity therein, is less than 7.20 g/cm$^3$.

7. A steel powder according to claim 5, **wherein** $\underline{d}$ < 6.97 g/cm$^3$.

8. A steel powder according to any one of claims 1-7, **wherein** the composition of the powder is such that, after sintering or melting-solidification of the powder or heat treatment of the powder at a temperature above 1 000°C and subsequent quenching thereof, the sintered, melted-solidified or heat treated piece of steel made of the powder is austenitic, having a BCC phase content therein of 0-10 volume%, preferably 0-5 volume%.

9. A steel powder according to any one of claims 1-8, **wherein** the powder is a gas-atomised powder having a median particle diameter m, wherein m < 100 $\mu$m.

10. A steel powder according to any one of claims 1-8, **wherein** the powder is a gas-atomised powder having a median particle diameter m, wherein m < 20$\mu$m.

11. A steel powder according to any one of claims 1-10, **wherein** Mn $\geq$ 16.5 wt.%.

12. A steel powder according to any one of claims 1-10, **wherein** Mn $\geq$ 19 wt.%.

13. A steel powder according to any one of claims 1-12, **wherein** Al > 6.0 wt.%.

14. A steel powder according to any one of claims 1-13, **wherein** Al > 6.5 wt.%.

15. A method of producing a powder according to any one of claims 1-14, comprising the steps of

- providing a steel melt having a composition such that, when subjected to an atomization process, it will form a powder according to any one of claims 1-14,
- providing a powder by atomising the steel melt,
- extracting, from the atomised powder, a powder fraction which has a median particle diameter m < 100 $\mu$m, or such that m < 20$\mu$m.

| | Europäisches Patentamt |
|---|---|
| | European Patent Office |
| | Office européen des brevets |

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/024892 A1 (ROVALMA SA [ES]) 8 February 2018 (2018-02-08) * page 2 * * page 12 - page 16 * * page 39; example 3C; table 5 * ----- | 1-15 | INV. B22F1/00 B22F9/08 C22C33/02 C22C38/00 C22C38/02 |
| A | IRVING MELVIN BERNSTEIN ET AL: "Residual and Minor Elements in Stainless Steels", HANDBOOK OF STAINLESS STEELS, XX, XX, 1 January 1977 (1977-01-01), pages 14-1, XP002430954, * table 1 * ----- | 1-15 | C22C38/06 C22C38/28 C22C38/36 C22C38/38 ADD. B22F3/15 |
| A | Malvern: "A basic guide to particle characterization", , 31 December 2015 (2015-12-31), XP055780752, Retrieved from the Internet: URL:https://www.cif.iastate.edu/sites/defa ult/files/uploads/Other_Inst/Particle%20Si ze/Particle%20Characterization%20Guide.pdf [retrieved on 2021-03-01] * page 5; figure 3 * ----- -/-- | 1-15 | B22F3/22 B22F10/14 B22F10/28 B22F10/34 B33Y70/00 |

TECHNICAL FIELDS SEARCHED (IPC)

B22F
B33Y
C22C

The present search report has been drawn up for all claims

| Place of search | Date of completion of the search | Examiner |
|---|---|---|
| The Hague | 8 June 2021 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 15 2452

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RENLIANG XU ET AL: "Comparison of sizing small particles using different technologies", POWDER TECHNOLOGY, ELSEVIER, BASEL (CH), vol. 132, no. 2-3, 24 June 2003 (2003-06-24), pages 145-153, XP002711749, ISSN: 0032-5910, DOI: 10.1016/S0032-5910(03)00048-2 * page 146; figure 1 * * abstract * * table 6 * * "Concluding Remarks"; page 152 * | 1-15 | B33Y80/00 |
| A | EP 3 719 158 A1 (DEUTSCHE EDELSTAHLWERKE SPECIALTY STEEL GMBH & CO KG [DE]) 7 October 2020 (2020-10-07) * table 1 * * claims 1-14 * | 1-15 | |
| A | US 5 278 881 A (KATO TAKAHIKO [JP] ET AL) 11 January 1994 (1994-01-11) * Alloy No. 4; table 3 * | 1-15 | TECHNICAL FIELDS SEARCHED (IPC) |

The present search report has been drawn up for all claims

| Place of search | Date of completion of the search | Examiner |
|---|---|---|
| The Hague | 8 June 2021 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 2452

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2021

| Patent document cited in search report | | Publication date | Patent family member(s) | | Publication date |
|---|---|---|---|---|---|
| WO 2018024892 | A1 | 08-02-2018 | NONE | | |
| EP 3719158 | A1 | 07-10-2020 | EP 3719158 A1 | | 07-10-2020 |
| | | | WO 2020200842 A1 | | 08-10-2020 |
| | | | WO 2020200843 A1 | | 08-10-2020 |
| US 5278881 | A | 11-01-1994 | NONE | | |

EPO FORM P0459

For more details about this annex : see Official Journal of the European Patent Office, No. 12/82